(19) Europäisches Patentamt
European Patent Office
Office européen des brevets

(11) Veröffentlichungsnummer : **0 094 055**
**B1**

(12) # EUROPÄISCHE PATENTSCHRIFT

(45) Veröffentlichungstag der Patentschrift : **03.12.86**

(51) Int. Cl.[4] : **C 09 B 62/085**, C 09 B 62/51, D 06 P 3/10, D 06 P 3/66

(21) Anmeldenummer : **83104470.6**

(22) Anmeldetag : **06.05.83**

(54) **Monoazoverbindungen, Verfahren zu ihrer Herstellung und ihre Verwendung als Farbstoffe.**

(30) Priorität : **12.05.82 DE 3217812**

(43) Veröffentlichungstag der Anmeldung : **16.11.83 Patentblatt 83/46**

(45) Bekanntmachung des Hinweises auf die Patenterteilung : **03.12.86 Patentblatt 86/49**

(84) Benannte Vertragsstaaten : **BE CH DE FR GB IT LI**

(56) Entgegenhaltungen :
**DE-B- 1 265 698**
**GB-A- 2 026 527**
**Die Akte enthält technische Angaben, die nach dem Eingang der Anmeldung eingereicht wurden und die nicht in dieser Patentschrift enthalten sind.**

(73) Patentinhaber : **HOECHST AKTIENGESELLSCHAFT**
**Postfach 80 03 20**
**D-6230 Frankfurt am Main 80 (DE)**

(72) Erfinder : **Bredereck, Hans-Joachim, Dr.**
**Fürstenbergerstrasse 23**
**D-6000 Frankfurt am Main (DE)**
Erfinder : **Hoyer, Ernst, Dr.**
**Eptingweg 3**
**D-6230 Frankfurt am Main 80 (DE)**
Erfinder : **Meininger, Fritz, Dr.**
**Loreleistrasse 7**
**D-6230 Frankfurt am Main 80 (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Jouve, 18, rue St-Denis, 75001 Paris, France

**Beschreibung**

Die Erfindung liegt auf dem technischen Gebiet der faserreaktiven Azofarbstoffe.

Aus der deutschen Patentschrift 1 265 698 ist im Tabellenbeispiel in Spalten 15/16 ein Monoazofarbstoff beschrieben, der einen faserreaktiven Monochlortriazinylrest und als weitere faserreaktive Reste eine β-Sulfatoethylsulfonyl-Gruppe und eine Vinylsulfonylgruppe enthält.

Es wurden nunmehr neue, wertvolle, wasserlösliche Azoverbindungen entsprechend der allgemeinen Formel (1)

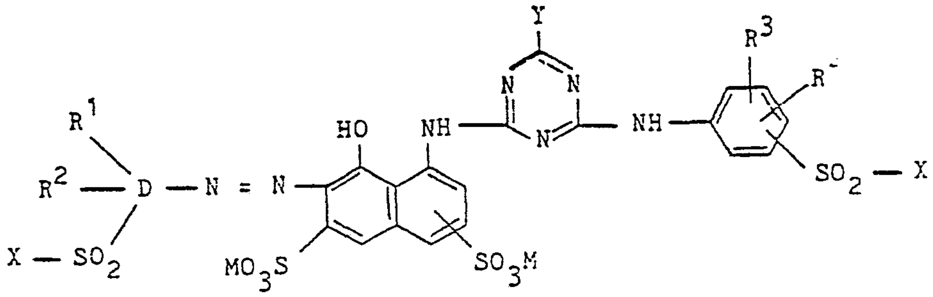

(1)

gefunden, in welcher

M für ein Wasserstoffatom oder das Äquivalent eines Metalls, wie insbesondere eines Alkali- oder Erdalkalimetalls, wie beispielsweise des Natriums, Kaliums, Lithiums und Calciums, steht,

D ein Benzolkern oder ein Naphthalinkern ist,

$R^1$ ein Wasserstoffatom oder eine Alkylgruppe von 1 bis 4 C-Atomen, wie beispielsweise die Äthylgruppe und insbesondere die Methylgruppe, oder eine Sulfogruppe (entsprechend der allgemeinen Formel $—SO_3M$ mit M der obengenannten Bedeutung) bedeutet,

$R^2$ ein Wasserstoffatom oder eine Alkylgruppe von 1 bis 4 C-Atomen, wie beispielsweise die Äthylgruppe und insbesondere die Methylgruppe, ist,

$R^3$ für ein Wasserstoffatom, eine Alkylgruppe von 1 bis 4 C-Atomen, wie beispielsweise die Äthylgruppe und insbesondere die Methylgruppe, oder für eine Alkoxygruppe von 1 bis 4 C-Atomen, wie beispielsweise die Äthoxygruppe und insbesondere die Methoxygruppe, steht und

$R^4$ eine Wasserstoffatom oder eine Alkylgruppe von 1 bis 4 C-Atomen, wie beispielsweise die Äthylgruppe und insbesondere die Methylgruppe, oder eine Alkoxygruppe von 1 bis 4 C-Atomen, wie beispielsweise die Äthoxygruppe und insbesondere die Methoxygruppe, bedeutet, wobei

$R^1$, $R^2$, $R^3$ und $R^4$ zueinander gleiche oder voneinander verschiedene Bedeutungen besitzen können,

Y ein Fluoratom oder ein Bromatom oder bevorzugt ein Chloratom ist und

X jedes eine β-Sulfatoäthyl-Gruppe (entsprechend der allgemeinen Formel $—CH_2—CH_2—OSO_3M$ mit M der obengenannten Bedeutung) oder eine β-Thiosulfatoäthyl-Gruppe (entsprechend der allgemeinen Formel $—CH_2—CH_2—S—SO_3M$ mit M der obengenannten Bedeutung) oder die β-Chloräthyl-Gruppe oder die Vinylgruppe bedeutet, wobei die beiden X gleiche oder voneinander verschiedene Bedeutungen besitzen können, und

die Gruppe(n) der Formel $—SO_2—X$ im Benzolkern in meta- oder para-Stellung zur Azogruppe bzw. zur acylierten Aminogruppe stehen und im Naphtalinkern in allen Stellungen gebunden sein können sowie

die zweite Gruppe der Formel $—SO_3M$ im Rest der Amino-naphthol-disulfonsäure in meta- oder para-Stellung zur acylierten Aminogruppe gebunden ist.

Die neuen Azoverbindungen können sowohl in saurer Form als auch in Form ihrer Salze vorliegen. Bevorzugt sind sie in Form der Salze, insbesondere der Alkali- und Erdalkalimetallsalze, und finden auch bevorzugt in Form dieser Salze Verwendung zum Färben (hier und im folgenden im allgemeinen Sinne und einschließlich des Bedruckens verstanden) von hydroxy- und/oder carbonamidgruppenhaltigen Materialien, insbesondere Fasermaterialien.

Die vorliegende Erfindung betrifft weiterhin Verfahren zur Herstellung der obengenannten und definierten Azoverbindungen der allgemeinen Formel (1). Sie lassen sich beispielsweise erfindungsgemäß herstellen, indem man eine Verbindung der allgemeinen Formel (2)

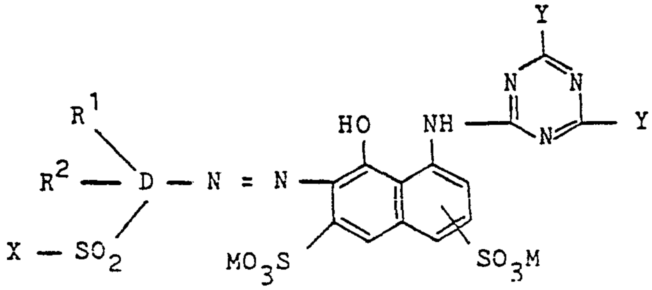

(2)

in welcher D, $R^1$, $R^2$, M, X und Y die obengenannten Bedeutungen besitzen und die zweite Gruppe der Formel $-SO_3M$ im Rest der Aminonaphthol-disulfosäure in meta- oder para-Stellung zur acylierten Aminogruppe steht, mit einem aromatischen Amin der allgemeinen Formel (3)

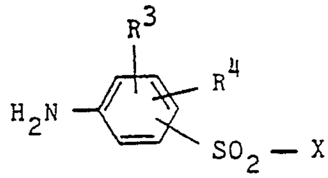

(3)

in welcher $R^3$, $R^4$ und X die obengenannten Bedeutungen haben und die Gruppe der Formel $-SO_2-X$ im Benzolkern in meta- oder para-Stellung zur Aminogruppe gebunden ist, umsetzt oder indem man eine Azoverbindung der allgemeinen Formel (4)

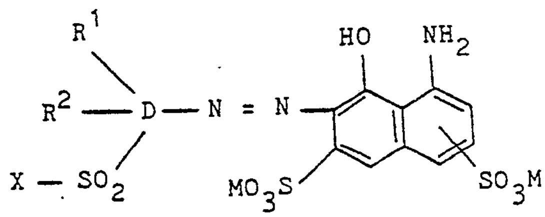

(4)

in welcher D, $R^1$, $R^2$, X und M die obengenannten Bedeutungen besitzen und die zweite Gruppe der Formel $-SO_3M$ im Rest der Aminonaphthol-disulfonsäure in meta- oder para-Stellung zur Aminogruppe gebunden ist, mit einer Dihalogenotriazinylverbindung der allgemeinen Formel (5)

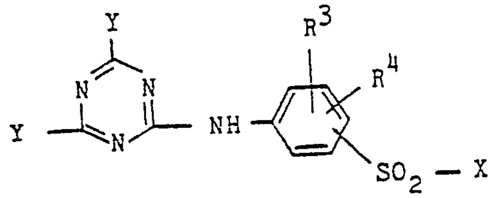

(5)

in welcher Y, $R^3$, $R^4$ und X die obigen Bedeutungen besitzen und die Gruppe der Formel $-SO_2-X$ im Benzolkern in meta- oder para-Stellung zur acylierten Aminogruppe gebunden ist, umsetzt.

Die Dihalogenotriazinylaminoverbindungen der allgemeinen Formel (2) lassen sich analog bekannter Verfahrensweise durch Kupplung des Diazoniumsalzes einer Aminoverbindung der allgemeinen Formel (6)

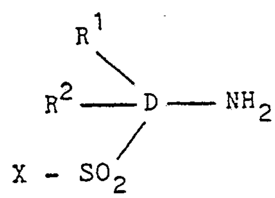

(6)

in welcher D, $R^1$, $R^2$ und X die obengenannten Bedeutungen haben und die Gruppe der Formel $-SO_2X$ im Benzolkern in meta- oder para-Stellung zur Aminogruppe gebunden ist, mit 1-(2',4'-Dihalogeno-1',3',5'-triazin-6'-yl)-amino-8-hydroxy-naphthalin-3,6- oder -4,6-disulfonsäure herstellen. Ebenfalls kann die Umsetzung der Dihalogenotriazinylverbindungen der allgemeinen Formeln-(2) und (5) mit den entsprechenden Aminoverbindungen analog bekannter Verfahrensweise erfolgen. Diese Reaktionen sind beispielsweise in W. F. Beech, Fibre-reactive Dyes, London 1970, Seiten 148 ff., beschrieben. — Die oben erwähnte Kupplungsreaktion erfolgt bevorzugt in einem pH-Bereich zwischen 4 und 7 bei einer Temperatur zwischen 0 °C und 30 °C. Die Kondensationsreaktionen der Dihalogenotriazinylverbindungen mit den Aminoverbindungen werden in der Regel im wäßrigen Medium, gegebenenfalls unter Mitverwendung eines organischen Lösemittels, bei einer Temperatur zwischen 0 °C und 70 °C, vorzugsweise zwischen 20 °C und 70 °C, und bei einem pH-Wert von vorzugweise zwischen 4 und 7 durchgeführt.

Das erfindungsgemäße Verfahren kann somit in der Weise ausgeführt werden, daß man das Diazoniumsalz der Aminoverbindung der allgemeinen Formel (6) und die Anilinverbindung der allgemeinen Formel (3) in beliebiger Folge mit der 1-(2',4'-Dihalogeno-1',3',5'-triazin-6'-yl)-amino-8-naphtol-3,6- oder -4,6-disulfonsäure umsetzt.

Die bei den Kondensationsreaktionen freiwerdende Halogenwasserstoffsäure wird mittels säurebindender Mittel, wie beispielsweise Natrium- oder Kaliumhydroxid, Natrium- oder Kaliumcarbonat, Natrium- oder Kaliumbicarbonat, Natriumacetat oder einem basischen Natriumphosphat gebunden.

Aminoverbindungen der allgemeinen Formel (3), die als Ausgangsverbindungen zur Herstellung der erfindungsgemäßen Monoazoverbindungen dienen können, sind beispielsweise 3-(β-Sulfatoäthylsulfonyl)-anilin, 2-Methoxy-5-(β-sulfatoäthylsulfonyl)-anilin, 2,5-Dimethoxy-4-β-sulfatoäthylsulfonyl)-anilin, 2-Methoxy-4-(β-sulfatoäthylsulfonyl)-anilin, 4-Methoxy-5-(β-sulfatoäthylsulfonyl)-anilin, 2,4-Dimethoxy-5-(β-sulfatoäthylsulfonyl)-anilin, 2-Methoxy-5-methyl-4-(β-sulfatoäthylsulfonyl)-anilin, 2-Methyl-5-(β-sulfatoäthylsulfonyl)-anilin, 2,5-Dimethyl-4-(β-sulfatoäthylsulfonyl)-anilin, 2,6-Dimethyl-4-(β-sulfatoäthylsulfonyl)-anilin, 4-Methyl-3-(β-sulfatoäthylsulfonyl)-anilin und insbesondere das 4-(β-Sulfatoäthylsulfonyl)-anilin sowie die Derivate dieser Anilinverbindungen, in welchen die β-Sulfatoäthylsulfonyl-Gruppe durch die Vinylsulfonyl-, die β-Thiosulfatoäthylsulfonyl- oder die β-Chloräthylsulfonyl-Gruppe ausgetauscht ist.

Aminoverbindungen der allgemeinen Formel (6), die als Ausgangsverbindungen zur Herstellung der erfindungsgemäßen Azoverbindungen dienen können, sind beispielsweise 3-(β-Sulfatoäthylsulfonyl)-anilin, 2-Methyl-5-(β-sulfatoäthylsulfonyl)-anilin, 4-Methyl-3-(β-sulfatoäthylsulfonyl)-anilin, 2,5-Dimethyl-4-(β-sulfatoäthylsulfonyl)-anilin,2,6-Dimethyl-4-(β-sulfatoäthylsulfonyl)-anilin,4-(β-Sulfatoäthylsulfonyl)-anilin-2-sulfonsäure, 6-(β-Sulfatoäthylsulfonyl)-2-aminonaphthalin-1-sulfonsäure, 8-(β-Sulfatoäthylsulfonyl)-2-aminonaphthalin, 6-(β-Sulfatoäthylsulfonyl)-2-aminonaphthalin, 8-(β-Sulfatoäthylsulfonyl)-2-aminonaphthalin-6-sulfonsäure und insbesondere das 4-(β-Sulfatoäthylsulfonyl)-anilin sowie die Derivate dieser Anilin- und Naphthylamin-Verbindungen, in welchen die β-Sulfatoäthylsulfonyl-Gruppe durch die Vinylsulfonyl-, β-Thiosulfatoäthylsulfonyl- oder die β-Chloräthylsulfonyl-Gruppe ausgetauscht ist.

Von den erfindungsgemäßen Azoverbindungen können diejenigen entsprechend der allgemeinen Formel (1) hervorgehogen werden, in welcher D den Benzolkern bedeutet und $R^1$, $R^2$, $R^3$ und $R^4$ jedes für ein Wasserstoffatom stehen oder in welcher D einen Naphthalinkern bedeutet, $R^1$ ein Wasserstoffatom oder eine Sulfogruppe ist und $R^2$, $R^3$ und $R^4$ jedes für ein Wasserstoffatom stehen.

Von den erfindungsgemäßen Azoverbindungen sind weiterhin diejenigen bevorzugt, in welchen die Gruppen X für die Vinylgruppe und insbesondere für die β-Sulfatoäthyl-Gruppe stehen.

Hervorzuheben sind insbesondere die in den Beispielen 1, 2, 7, 16, 30, 42 und 49 beschriebenen erfindungsgemäßen Azoverbindungen.

Die Abscheidung der erfindungsgemäß hergestellten Verbindungen der allgemeinen Formel (1) aus der Syntheselösung kann nach allgemein bekannten Methoden erfolgen, so beispielsweise entweder durch Ausfällen aus dem Reaktionsmedium mittels Elektrolyten, wie beispielsweise Natriumchlorid oder Kaliumchlorid, oder durch Eindampfen der Reaktionslösung, beispielsweise Sprühtrocknung, wobei dieser Reaktionslösung eine Puffersubstanz zugefügt werden kann.

Die erfindungsgemäßen Azoverbindungen besitzen wertvolle Farbstoffeigenschaften. Infolge der beiden faserreaktiven Gruppen der Vinylsulfonylreihe und des Halogenotriazinyl-Restes weisen sie faserreaktive Eigenschaften auf. Die neuen Verbindungen werden bevorzugt zum Färben (im anfangs genannten allgemeinen Sinne) von hydroxy- und/oder carbonamidgruppenhaltigen Materialien, beispielsweise in Form von Flächengebilden, wie Papier und Leder oder von Folien, wie bspw. aus Polyamid, oder in der Masse, wie beispielsweise von Polyamid und Polyurethan, insbesondere aber von diesen Materialien in Faserform verwendet. Auch können die bei der Synthese der erfindungsgemäßen Verbindungen anfallenden Lösungen dieser Azoverbindungen, gegebenenfalls nach Zusatz einer Puffersubstanz, gegebenenfalls auch nach Konzentrieren oder Verdünnen, direkt als Flüssigpräparation der färberischen Verwendung zugeführt werden. Die vorliegende Erfindung betrifft somit auch die Verwendung der Verbindungen der allgemeinen Formel (1) zum Färben (im obigen Sinne) dieser Materialien bzw. Verfahren zum Färben solcher Materialien in an und für sich üblichen Verfahrensweisen, bei welchen eine Verbindung der allgemeinen Formel (1) als Farbmittel eingesetzt wird.

Bevorzugt kommen die Materialien in Form von Fasermaterialien zur Anwendung, insbesondere in Form von Textilfasern, wie Garnen, Wickelkörpern und Geweben.

Hydroxygruppenhaltige Materialien sind solche natürlichen oder synthetischen Ursprungs, wie beispielsweise Cellulosefasermaterialien oder deren Regeneratprodukte und Polyvinylalkohole. Cellulosefasermaterialien sind vorzugsweise Baumwolle, aber auch andere Pflanzenfasern, wie Leinen, Hanf, Jute und Ramifasern ; regenerierte Cellulosefasern sind beispielsweise Zellwolle und Viskosekunstseide. Carbonamidgruppenhaltige Materialien sind beispielsweise synthetische und natürliche Polyamide und Polyurethane, insbesondere in Form von Fasern, beispielsweise Wolle und andere Tierhaare, Seide, Leder, Polyamid-6,6, Polyamid-6-, Polyamid-11 und Polyamid-4.

Die erfindungsgemäßen Verbindungen der allgemeinen Formel (1) lassen sich auf den genannten Substraten, insbesondere auf den genannten Fasermaterialien, nach den für wasserlösliche, insbesondere nach den für wasserlösliche faserreaktive Farbstoffe bekannten Anwendungstechniken applizieren und fixieren.

So erhält man mit ihnen auf Cellulosefasern nach den Ausziehverfahren aus langer Flotte unter Verwendung von verschiedensten säurebindenden Mitteln und gegebenenfalls neutralen Salzen, wie Natriumchlorid oder Natriumsulfat, sehr gute Farbausbeuten sowie einen ausgezeichneten Farbaufbau. Man färbt bevorzugt in wäßrigem Bad bei Temperaturen zwischen 60 und 105 °C, gegebenenfalls bei Temperaturen bis zu 120 °C unter Druck und gegebenenfalls in Gegenwart von üblichen Färbereihilfsmitteln. Man kann dabei so vorgehen, daß man das Material in das warme Bad einbringt und dieses allmählich auf die gewünschte Färbetemperatur erwärmt und den Färbeprozeß bei dieser Temperatur zu Ende führt. Die das Ausziehen des Farbstoffes beschleunigenden Neutralsalze können dem Bade gewünschtenfalls auch erst nach Erreichen der eigentlichen Färbetemperatur zugesetzt werden.

Nach dem Klotzverfahren werden auf Cellulosefasern ebenfalls ausgezeichnete Farbausbeuten und ein sehr guter Farbaufbau erhalten, wobei durch Verweilen bei Raumtemperatur oder erhöhter Temperatur, beispielsweise bis zu etwa 60 °C, durch Dämpfen oder mit Trockenhitze in üblicher Weise fixiert werden kann.

Ebenfalls nach den üblichen Druckverfahren für Cellulosefasern, die einphasig — beispielsweise durch Bedrucken mit einer Natriumbicarbonat oder ein anderes säurebindendes Mittel enthaltenden Druckpaste und anschließendes Dämpfen bei 100 bis 103 °C, — oder zweiphasig — beispielsweise durch Bedrucken mit neutraler oder schwach saurer Druckfarbe und anschließendem Fixieren entweder durch Hindurchführen durch eine heißes elektrolythaltiges alkalisches Bad oder durch Überklotzen mit einer alkalischen elektrolythaltigen Koltzflotte und anschließendem Verweilen oder Dämpfen oder Behandlung mit Trockenhitze des alkalisch überklotzten Materials, — durchgeführt werden können, erhält man farbstarke Drucke mit gutem Stand der Konturen und einem klaren Weißfond. Der Ausfall der Drucke ist von wechselnden Fixierbedingungen nur wenig abhängig.

Bei der Fixierung mittels Trockenhitze nach den üblichen Thermofixierverfahren verwendet man Heißluft von 120 bis 200 °C. Neben dem üblichen Wasserdampf von 101 bis 103 °C kann auch überhitzter Dampf und Druckdampf von Temperaturen bis zu 160 °C eingesetzt werden.

Die säurebindenden und die Fixierung der Verbindung der Formel (1) auf den Cellulosefasern bewirkenden Mittel sind beispielsweise wasserlösliche basische Salze der Alkalimetalle und ebenfalls Erdalkalimetalle von anorganischen oder organischen Säuren oder Verbindungen, die in der Hitze Alkali freisetzen. Insbesondere sind die Alkalimetallhydroxide und Alkalimetallsalze von schwachen bis mittelstarken anorganischen oder organischen Säure zu nennen, wobei von den Alkaliverbindungen vorzugsweise die Natrium- und Kaliumverbindungen gemeint sind. Solche säurebindenden Mittel sind beispielsweise Natriumhydroxid, Kaliumhydroxid, Natriumcarbonat, Natriumbicarbonat, Kaliumcarbonat, Natriumformiat, Natriumdihydrogenphosphat, Dinatriumhydrogenphosphat, Natriumtrichloracetat, Wasserglas oder Trinatriumphosphat.

Durch die Behandlung der erfindungsgemäßen Verbindungen mit den säurebindenden Mitteln, gegebenenfalls unter Wärmeeinwirkung, werden die erfindungsgemäßen Verbindungen (Farbstoffe) chemisch an die Cellulosefaser gebunden ; sie zeichnen sich auf diesen Fasermaterialien bei Anwendung in den Färbe- und Druckverfahren durch eine hohe Fixierausbeute aus. Die Cellulosefärbungen zeigen nach der üblichen Nachbehandlung durch Spülen zur Entfernung von nicht fixierten Farbstoffanteilen ausgezeichnete Naßechtheiten, zumal sich nicht fixierte Farbstoffanteile leicht wegen ihrer guten Kaltwasserlöslichkeit auswaschen lassen.

Die mit den erfindungsgemäßen Verbindungen der allgemeinen Formel (1) hergestellten Färbungen und Drucke zeichnen sich durch sehr klare Nuancen aus. Insbesondere besitzen die Färbungen und Drucke auf Cellulosefasermaterialien eine gute Lichtechtheit und sehr gute Naßechtheiten, wie Wasch- Walk-, Wasser-, Seewasser-, Überfärbe- und saure sowie alkalische Schweißechtheiten, desweiteren eine gute Plissierechtheit, Bügelechtheit und Reibechtheit.

Des weiteren können die erfindungsgemäßen Verbindungen der allgemeinen Formel (1) auch für das faserreaktive Färben von Wolle Verwendung finden. Auch läßt sich filzfrei oder filzarm ausgerüstete Wolle (vgl. bspw. H. Rath, Lehrbuch der Textilchemie, Springer-Verlag, 3. Auflage (1972), S. 295-299, insbesondere die Ausrüstung nach dem sogenannten Hercosett-Verfahren (S. 298) ; J. Soc. Dyers and Colourists 1972, 93-99, und 1975, 33-44) mit sehr guten Echtheitseigenschaften färben.

Das Verfahren des Färbens auf Wolle erfolgt hierbei in üblicher und bekannter Färbeweise aus saurem Milieu. So wird bspw. dem Färbebad Essigsäure und/oder Ammoniumsulfat oder Essigsäure und Ammoniumacetat oder Natriumacetat zufügen, um den gewünschten pH-Wert zu erhalten. Um eine brauchbare Egalität der Färbung zu erreichen, empfiehlt sich ein Zusatz an üblichen Egalisierhilfsmitteln, wie beispielsweise auf Basis eines Umsetzungsproduktes von Cyanurchlorid mit der 3-fach molaren Menge einer Aminobenzolsulfonsäure und/oder einer Aminonaphthalinsulfonsäure oder auf Basis eines Umsetzungsproduktes von beispielsweise Stearylamin mit Äthylenoxid. So wird beispielsweise die Verbindung der allgemeinen Formel (1) bevorzugt zunächst aus saurem Färbebad mit einem pH von etwa 3,5 bis 5,5 unter Kontrolle des pH-Wertes dem Ausziehprozeß unterworfen und der pH-Wert sodann, gegen Ende der Färbezeit, in den neutralen und gegebenenfalls schwach alkalischen Bereich bis zu einem pH-Wert von 8,5 verschoben, um besonders zur Erzielung von hohen Farbtiefen die volle reaktive Bindung zwischen der Verbindung der Formel (1) und der Faser herbeizuführen. Gleichzeitig wird der nicht reaktiv gebundene Farbstoffanteil abgelöst.

Die hier beschriebene Verfahrensweise gilt auch zur Herstellung von Färbungen auf Fasermaterialien

aus anderen natürlichen Polyamiden oder aus synthetischen Polyamiden und Polyurethanen. In der Regel wird das zu färbende Material bei einer Temperatur von etwa 40 °C in das Bad eingebracht, dort einige Zeit darin bewegt, das Färbebad dann auf den gewünschten schwach sauren, vorzugsweise schwach essigsauren, pH-Wert nachgestellt und die eigentliche Färbung bei einer Temperatur zwischen 60 und 98 °C durchgeführt. Die Färbungen können aber auch bei Siedetemperatur oder in geschlossenen Färbeapparaturen bei Temperaturen bis zu 106 °C ausgeführt werden. Da die Wasserlöslichkeit der Verbindungen der allgemeinen Formel (1) sehr gut ist, lassen sie sich auch mit Vorteil bei üblichen kontinuierlichen Färbeverfahren einsetzen. Die Farbstärke der erfindungsgemäßen Verbindungen der allgemeinen Formel (1) ist sehr hoch.

Die erfindungsgemäßen Azoverbindungen liefern auf den genannten Materialien, bevorzugt Fasermaterialien, sehr klare, gelbstichig bis blaustichig rote Färbungen.

Die nachstehenden Beispiele dienen zur Erläuterung der Erfindung. Die Teile sind Gewichtsteile, die Prozentangaben stellen Gewichtsprozente dar, sofern nicht anders vermerkt. Gewichtsteile beziehen sich zu Volumenteilen wie Kilogramm zu Liter.

Die in den Beispielen formelmäßig beschriebenen Verbindungen sind in Form der freien Säuren angegeben ; im allgemeinen werden sie in Form ihrer Salze, vorzugsweise Natrium- oder Kaliumsalze, hergestellt und isoliert und in Form ihrer Salze zum Färben verwendet. Ebenso können die in den nachfolgenden Beispielen, insbesondere Tabellenbeispielen, in Form der freien Säure genannten Ausgangsverbindungen als solche oder in Form ihrer Salze, vorzugsweise Alkalimetallsalze, wie Natrium- oder Kaliumsalze, in die Synthese eingesetzt werden.

Beispiel 1

a) In eine Suspension von 225,2 Teilen 1-Amino-8-naphthol-4,6-disulfonsäure in 1 440 Teilen Wasser und 720 Teilen Eis werden unter gutem Rühren 155,2 Teile Cyanurchlorid eingetragen ; der Reaktionsansatz wird noch 4 Stunden bei einer Temperatur zwischen 3 und 5 °C und bei einem pH-Wert zwischen 1,7 und 2,2, der mittels Natriumbicarbonat gehalten wird, weitergerührt.

b) Getrennt hiervon wird das Diazoniumsalz der Diazokomponente hergestellt : Eine Lösung mit einem pH-Wert von 6,7-6,8 von 224,8 Teilen 4-β-Sulfatoäthylsulfonyl-anilin in 640 Teilen Wasser werden mit 105 Volumenteilen einer 40 %igen wäßrigen Natriumnitritlösung versetzt. Dieses Gemisch wird unter gutem Rühren in eine Mischung aus 800 Teilen zerkleinertem Eis und 70 Volumenteilen einer 95 %igen wäßrigen Schwefelsäure einfließen lassen. Man rührt noch eine Stunde bei einer Temperatur zwischen 0 °C und 5 °C nach und zersetzt sodann, wie üblich, überschüssige salpetrige Säure mit wenig Amidosulfonsäure.

c) Das hier unter a) hergestellte primäre Kondensationsprodukt aus Cyanurchlorid und der Aminonaphtholdisulfonsäure wird mit der hier unter b) beschriebenen Diazoniumsalzlösung vereinigt. Zur Durchführung der Kupplungsreaktion wird das stark saure Reaktionsgemisch bei einer Temperatur von etwa 5 °C mittels Calciumcarbonat auf einen pH-Wert von 4,0 bis 4,5 eingestellt und die Temperatur auf 15 bis 20 °C erhöht. Es wird noch einige Stunden bei diesem pH-Wert und dieser Temperatur weitergerührt, bis die Kupplung beendet ist.

d) Die Lösung der Monoazoverbindung von c) wird mit einer Lösung mit einem pH-Wert von 5,5 bis 6,0 von 247,3 Teilen 4-β-Sulfatoäthylsulfonyl-anilin in 640 Teilen Wasser vereinigt. Der pH-Wert wird auf etwa 5 gehalten und das Reaktionsgemisch im Verlaufe von zwei Stunden auf eine Temperatur von 60 bis 65 °C erwärmt. Sodann wird der pH mittels Calciumcarbonat auf einen Wert zwischen 6,0 und 6,5 erhöht, und das ausgefallene Calciumsulfat wird nach 15 Minuten abgesaugt und mit Wasser gewaschen. Das vereinigte Filtrat und Waschwasser wird durch Zugabe von Natriumoxalat von Calciumionen befreit, das Calciumoxalat abgesaugt und das Filtrat sprühgetrocknet.

Es werden etwa 1 120 Teile eines Elektrolytsalze (vorwiegend Natriumchlorid und Natriumsulfat) haltiges Pulver erhalten, das zu 70 % das Natriumsalz der Verbindung der Formel

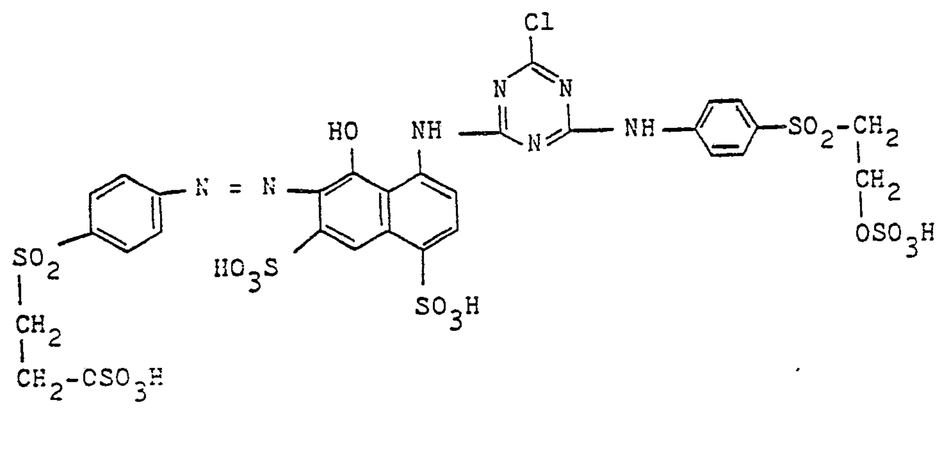

enthält. Diese zeigt sehr gute Farbstoffeigenschaften und liefert nach den in der Technik üblichen Anwendungs- und Fixiermethoden für faserreaktive Farbstoffe auf den in der Beschreibung genannten Materialien, wie Cellulosefasermaterialien, insbesondere Baumwolle, farbstarke rote Färbungen und Drucke mit sehr guten Echtheitseigenschaften, von denen vor allem die sehr guten Wasch-, Licht-, Alkali-, Säure-, Wasser-, Meerwasser-, Schweiß- und Reibechtheiten hervorgehoben werden können. Die Färbungen zeichnen sich weiterhin durch ihren hohen Fixiergrad auf den Cellulosematerialien aus.

Beispiel 2

Man trägt unter gutem Rühren 19,4 Teile Cyanurchlorid und 31,9 Teile 1-Amino-8-naphthol-3,6-disulfonsäure schnell in eine Mischung aus 330 Teilen Wasser und 40 Teilen Eis ein. Man rührt sodann noch etwa 3,5 Stunden bei einem pH-Wert zwischen 1,5 und 2,0 und einer Temperatur zwischen 10 und 15 °C weiter. Die Lösung dieses primären Kondensationsproduktes wird sodann mittels Kieselgur und Filtration geklärt.

Man vereinigt diese Lösung mit einer auf üblichem Wege durch Diazotierung mittels Natriumnitrit und Schwefelsäure in wäßrigem Medium hergestellten Suspension des Diazoniumsalzes aus 41,1 Teilen 6-(β-Sulfatoäthylsulfonyl)-2-aminonaphthalin-1-sulfonsäure, stellt das stark saure Kupplungsgemisch sodann bei einer Temperatur von etwa 10 °C auf einen pH-Wert von 4,0 bis 4,5 mittels Calciumcarbonat und rührt noch einige Stunden bei 10 bis 14 °C und innerhalb dieses pH-Bereiches weiter.

Sodann gibt man eine Lösung (mit einem pH-Wert von 5) von 29,5 Teilen 4-β-Sulfatoäthylsulfonyl-anilin in 100 Teilen Wasser hinzu, rührt den Ansatz zwei bis drei Stunden bei einer Temperatur von 18 bis 22 °C, erwärmt ihn dann auf 50 bis 55 °C und hält ihn unter Konstanthaltung des pH-Wertes von 4,0 bis 4,5 mittels Calciumcarbonat während 30 Minuten bei dieser Temperatur. Man rührt sodann noch einige Stunden bei 18 bis 20 °C nach, saugt das Calciumsulfat ab, wäscht es mit Wasser nach und fällt in diesem vereinigten Filtrat und Waschwasser die Calciumionen mittels Natriumoxalat bei einem pH-Wert von 4,5 bis 5,0 und einer Temperatur von 30 °C. Nach einstündigem Rühren filtriert man ab und isoliert die erfindungsgemäße Monoazoverbindung aus dem Filtrat durch Sprühtrocknung.

Man erhält 155,6 Teile eines dunkelroten Pulvers, das neben Elektrolytsalzen etwa 73 %ig an dem Natriumsalz der Verbindung der Formel

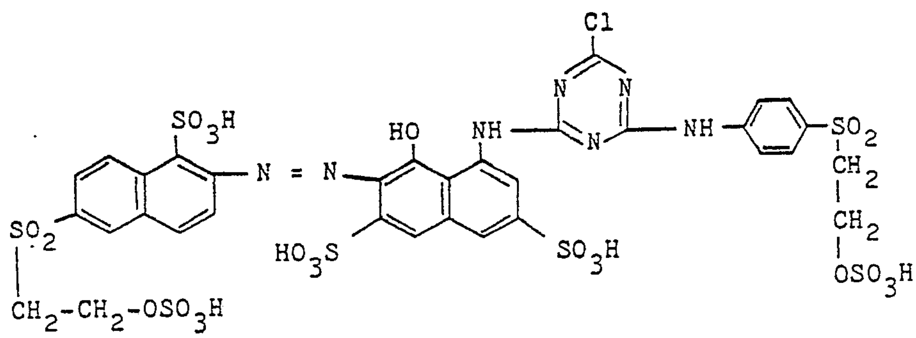

ist. Diese erfindungsgemäße Monoazoverbindung zeigt sehr gute faserreaktive Farbstoffeigenschaften und liefert nach den in der Technik üblichen Druck- und Färbeweisen für faserreaktive Farbstoffe beispielsweise auf Cellulosefasermaterialien farbstarke rote Färbungen und Drucke von sehr guten Fabrikations- und Gebrauchsechtheiten, unter denen die Lichtechtheit, die Wasch-, Schweiß-, Wasser- und Meerwasserechtheiten sowie die Beständigkeit gegen gechlortes Trinkwasser (Chlorbadewasser) besonders erwähnt werden können. Die Fixierquoten dieser erfindungsgemäßen Monoazoverbindung auf Cellulosefasermaterialien ist sehr hoch.

Beispiele 3 bis 72

In den nachfolgenden Tabellenbeispielen sind weitere erfindungsgemäße Monoazoverbindungen mit Hilfe ihrer Komponenten durch die allgemeine Formel (1a)

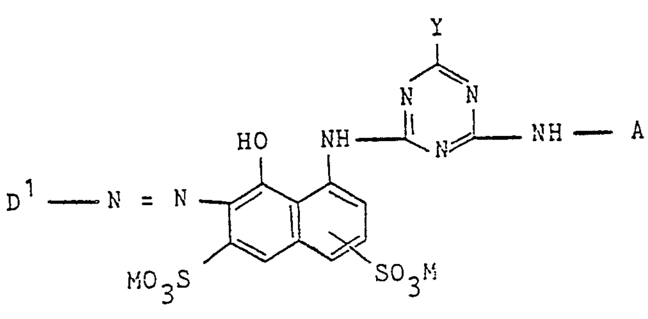

(Ia)

beschrieben. Sie lassen sich in erfindungsgemäßer Weise, beispielsweise analog einem der obigen Ausführungsbeispiele, aus ihren Komponenten (Cyanurchlorid, Cyanurbromid oder Cyanurfluorid, der Aminoverbindung $D^1—NH_2$ entsprechend der allgemeinen Formel (6) als Diazokomponente, der 1-Amino-8-naphthol-3,6- oder -4,6-disulfonsäure als Kupplungskomponente (die in dem jeweiligen Tabellenbeispiel durch die Stellung der einen Sulfogruppe zur Aminogruppe charakterisiert ist) und der Aminoverbindung $A—NH_2$ entsprechend der allgemeinen Formel (3)) herstellen. Sie besitzen sehr gute faserreaktive Farbstoffeigenschaften und liefern auf den in der Beschreibung genannten Materialien, wie insbesondere Cellulosefasermaterialien, nach den in der Technik üblichen Anwendungsmethoden in der Färberei und Druckerei, vorzugsweise nach den in der Technik üblichen Applikations- und Fixiermethoden für faserreaktive Farbstoffe, farbstarke Färbungen und Drucke mit guten Echtheiten in dem in dem jeweiligen Tabellenbeispiel angegebenen Farbton.

(Siehe Tabellen Seite 9 ff.)

| Bsp. | Diazokomponente $D^1-NH_2$ | Aminoverbindung $A-NH_2$ | Stellung der zweiten Sulfogruppe | Y | Farbton |
|---|---|---|---|---|---|
| 3 | 3-(ß-Sulfatoäthylsulfonyl)-anilin | 4-(ß-Sulfatoäthylsulfonyl)-anilin | para | Cl | gelbstichig rot |
| 4 | dito | 3-(ß-Sulfatoäthylsulfonyl)-anilin | para | Cl | gelbstichig rot |
| 5 | 2-Methyl-5-(ß-sulfato-äthylsulfonyl)-anilin | 4-(ß-Sulfatoäthylsulfonyl)-anilin | para | Cl | gelbstichig rot |
| 6. | 4-Methyl-3-(ß-sulfatoätyl-sulfonyl)-anilin | 4-(ß-Sulfatoäthylsulfonyl)-anilin | para | Cl | rot |
| 7 | 4-(ß-Sulfatoäthylsulfonyl)-anilin | 4-(ß-Sulfatoäthylsulfonyl)-anilin | meta | Cl | rot |
| 8 | 4-(ß-Sulfatoäthylsulfonyl)-anilin | 4-Vinylsulfonyl-anilin | para | Cl | rot |
| 9 | 3-(ß-Sulfatoäthylsulfonyl)-anilin | 2-Methoxy-5-(ß-sulfato-äthylsulfonyl)-anilin | para | Cl | gelbstichig rot |
| 10 | 3-(ß-Sulfatoäthylsulfonyl)-anilin | 4-Methoxy-3-(ß-sulfato-äthylsulfonyl)-anilin | para | Cl | gelbstichig rot |
| 11 | 3-(ß-Sulfatoäthylsulfonyl)-anilin | 2,4-Dimethoxy-5-(ß-sulfa-toäthylsulfonyl)-anilin | para | Cl | gelbstichig rot |

| Bsp. | Diazokomponente $D^1-NH_2$ | Aminoverbindung $A-NH_2$ | Stellung der zweiten Sulfogruppe | Y | Farbton |
|---|---|---|---|---|---|
| 12 | 3-(ß-Sulfatoäthylsulfonyl)-anilin | 2-Methyl-5-(ß-sulfatoäthylsulfonyl)-anilin | para | Cl | gelbstichig rot |
| 13 | 3-(ß-Sulfatoäthylsulfonyl)-anilin | 2-Methoxy-5-methyl-4-(ß-sulfatoäthylsulfonyl)-anilin | para | Cl | gelbstichig rot |
| 14 | 3-(ß-Sulfatoäthylsulfonyl)-anilin | 2,5-Dimethoxy-4-(ß-sulfatoäthylsulfonyl)-anilin | para | Cl | gelbstichig rot |
| 15 | 3-(ß-Sulfatoäthylsulfonyl)-anilin | 4-(ß-Sulfatoäthylsulfonyl)-anilin | meta | Cl | rot |
| 16 | 3-(ß-Sulfatoäthylsulfonyl)-anilin | 3-(ß-Sulfatoäthylsulfonyl)-anilin | meta | Cl | rot |
| 17 | 3-(ß-Sulfatoäthylsulfonyl)-anilin | 4-Methyl-3-(ß-sulfatoäthylsulfonyl)-anilin | meta | Cl | rot |
| 18 | 3-(ß-Sulfatoäthylsulfonyl)-anilin | 2-Methoxy-5-(ß-sulfatoäthylsulfonyl)-anilin | meta | Cl | rot |
| 19 | 3-(ß-Sulfatoäthylsulfonyl)-anilin | 2-Methyl-5-(ß-sulfatoäthylsulfonyl)-anilin | meta | Cl | rot |
| 20 | 3-(ß-Sulfatoäthylsulfonyl)-anilin | 2-Methoxy-5-methyl-4-(ß-sulfatoäthylsulfonyl)-anilin | meta | Cl | rot |

| Bsp. | Diazokomponente $D^1-NH_2$ | Aminoverbindung $A-NH_2$ | Stellung der zweiten Sulfogruppe | Y | Farbton |
|---|---|---|---|---|---|
| 21 | 3-(ß-Sulfatoäthylsulfonyl)-anilin | 2,5-Dimethoxy-4-(ß-sulfatoäthylsulfonyl)-anilin | meta | Cl | rot |
| 22 | 4-(ß-Thiosulfatoäthylsulfonyl-anilin | 4-(ß-Sulfatoäthylsulfonyl)-anilin | para | Cl | rot |
| 23 | 2,6-Dimethyl-4-vinylsulfonyl-anilin | 4-(ß-Sulfatoäthylsulfonyl)-anilin | para | Cl | rot |
| 24 | 4-(ß-Chloräthylsulfonyl)-anilin | 4-(ß-Sulfatoäthylsulfonyl)-anilin | para | Cl | rot |
| 25 | 4-(ß-Sulfatoäthylsulfonyl)-anilin | 4-(ß-Thiosulfatoäthylsulfonyl)-anilin | para | Cl | rot |
| 26 | dito | 4-(ß-Chloräthylsulfonyl)-anilin | para | Cl | rot |
| 27 | dito | 2-Methyl-5-(ß-sulfatoäthylsulfonyl)-anilin | para | Cl | rot |
| 28 | dito | 4-Methyl-3-(ß-sulfatoäthylsulfonyl)-anilin | para | Cl | rot |
| 29 | dito | 2,4-Dimethoxy-5-(ß-sulfatoäthylsulfonyl)-anilin | para | Cl | rot |

| Bsp. | Diazokomponente $D^1-NH_2$ | Aminoverbindung $A-NH_2$ | Stellung der zweiten Sulfogruppe | Y | Farbton |
|---|---|---|---|---|---|
| 30 | dito | 3-(ß-Sulfatoäthylsulfonyl)-anilin | para | Cl | rot |
| 31 | dito | 2-Methoxy-5-methyl-4-(ß-sulfatoäthylsulfonyl)-anilin | para | Cl | rot |
| 32 | dito | 2,5-Dimethoxy-4-(ß-sulfatoäthylsulfonyl)-anilin | para | Cl | rot |
| 33 | dito | 3-(ß-Sulfatoäthylsulfonyl)-anilin | meta | Cl | rot |
| 34 | dito | 2-Methyl-5-(ß-sulfatoäthylsulfonyl)-anilin | meta | Cl | rot |
| 35 | dito | 2-Methoxy-5-(ß-sulfatoäthylsulfonyl)-anilin | meta | Cl | rot |
| 36 | dito | 2-Methoxy-4-(ß-sulfatoäthylsulfonyl)-anilin | meta | Cl | rot |
| 37 | dito | 2,5-Dimethoxy-4-(ß-sulfatoäthylsulfonyl)-anilin | meta | Cl | rot |
| 38 | dito | 2-Methoxy-5-methyl-4-(ß-sulfatoäthylsulfonyl)-anilin | meta | Cl | rot |

| Bsp. | Diazokomponente $D^1-NH_2$ | Aminoverbindung $A-NH_2$ | Stellung der zweiten Sulfogruppe | Y | Farbton |
|---|---|---|---|---|---|
| 39 | dito | 4-Methyl-3-(ß-sulfatoäthylsulfonyl)-anilin | meta | Cl | rot |
| 40 | dito | 4-Methoxy-3-(ß-sulfatoäthylsulfonyl)-anilin | meta | Cl | rot |
| 41 | dito | 2,4-Dimethoxy-5-(ß-sulfatoäthylsulfonyl)-anilin | meta | Cl | rot |
| 42 | dito | 4-(ß-Sulfatoäthylsulfonyl)-anilin | meta | F | rot |
| 43 | dito | dito | meta | Br | rot |
| 44 | dito | dito | para | F | rot |
| 45 | 8-(ß-Sulfatoäthylsulfonyl)-2-aminonaphthalin | 4-(ß-Sulfatoäthylsulfonyl)-anilin | meta | Cl | blaustichig rot |
| 46 | dito | dito | para | Cl | rot |
| 47 | 6-(ß-Sulfatoäthylsulfonyl)-2-aminonaphthalin | dito | meta | Cl | blaustichig rot |
| 48 | dito | dito | para | Cl | rot |
| 49 | 8-(ß-Sulfatoäthylsulfonyl)-2-aminonaphthalin-6-sulfonsäure | dito | meta | Cl | blaustichig rot |

| Bsp. | Diazokomponente $D^1-NH_2$ | Aminoverbindung $A-NH_2$ | Stellung der zweiten Sulfogruppe | Y | Farbton |
|---|---|---|---|---|---|
| 50 | dito | dito | para | Cl | rot |
| 51 | dito | 3-(ß-Sulfatoäthylsulfonyl)-anilin | meta | Cl | blaustichig rot |
| 52 | dito | dito | para | Cl | rot |
| 53 | dito | 2-Methoxy-5-(ß-sulfatoäthylsulfonyl)-anilin | meta | Cl | blaustichig rot |
| 54 | dito | dito | para | Cl | rot |
| 55 | dito | 2,5-Dimethoxy-4-(ß-sulfatoäthylsulfonyl)-anilin | meta | Cl | blaustichig rot |
| 56 | dito | dito | para | Cl | rot |
| 57 | dito | 2-Methoxy-5-methyl-4-(ß-sulfatoäthylsulfonyl)-anilin | meta | Cl | blaustichig rot |
| 58 | dito | dito | para | Cl | rot |
| 59 | 6-(ß-Sulfatoäthylsulfonyl)-2-aminonaphthalin-1-sulfonsäure | 4-(ß-Sulfatoäthylsulfonyl)-anilin | meta | F | blaustichig rot |
| 60 | dito | dito | meta | Cl | blaustichig rot |

| Bsp. | Diazokomponente $D^1-NH_2$ | Aminoverbindung $A-NH_2$ | Stellung der zweiten Sulfogruppe | Y | Farbton |
|---|---|---|---|---|---|
| 61 | dito | 2-Methoxy-5-(ß-sulfatoäthylsulfonyl)-anilin | meta | Cl | blaustichig rot |
| 62 | dito | 2-Methyl-5-(ß-sulfatoäthylsulfonyl)-anilin | meta | Cl | blaustichig rot |
| 63 | dito | 2-Methoxy-5-methyl-4-(ß-sulfatoäthylsulfonyl)-anilin | meta | Cl | blaustichig rot |
| 64 | dito | 2,5-Dimethoxy-4-(ß-sulfatoäthylsulfonyl)-anilin | meta | Cl | blaustichig rot |
| 65 | dito | 4-(ß-Sulfatoäthylsulfonyl)-anilin | para | Cl | rot |
| 66 | dito | 3-(ß-Sulfatäthylsulfonyl)-anilin | para | Cl | rot |
| 67 | dito | 2-Methyl-5-(ß-sulfatoäthylsulfonyl)-anilin | para | Cl | rot |
| 68 | dito | 2-Methoxy-5-(ß-sulfatoäthylsulfonyl)-anilin | para | Cl | rot |
| 69 | dito | 2-Methoxy-5-methyl-4-(ß-sulfatoäthylsulfonyl)-anilin | para | Cl | rot |
| 70 | dito | 2,5-Dimethoxy-4-(ß-sufatoäthylsulfonyl)-anilin | para | Cl | rot |
| 71 | dito | 3-(ß-Sulfatoäthylsulfonyl)-anilin | meta | F | blaustichig rot |
| 72 | dito | 3-Vinylsulfonyl-anilin | meta | F | blaustichig rot |

**Patentansprüche**

1. Wasserlösliche Azoverbindungen der allgemeinen Formel (1)

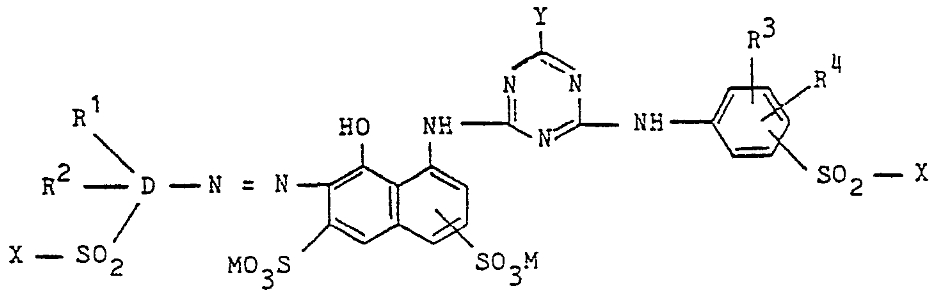

(1)

in welcher

M für ein Wasserstoffatom oder das Äquivalent eines Metalls steht,

D ein Benzolkern oder ein Naphthalinkern ist,

$R^1$ ein Wasserstoffatom oder eine Alkylgruppe von 1 bis 4 C-Atomen oder eine Sulfogruppe bedeutet,

$R^2$ ein Wasserstoffatom oder eine Alkylgruppe von 1 bis 4 C-Atomen ist,

$R^3$ für ein Wasserstoffatom, eine Alkylgruppe von 1 bis 4 C-Atomen oder für eine Alkoxygruppen von 1 bis 4 C-Atomen steht und

$R^4$ ein Wasserstoffatom oder eine Alkylgruppe von 1 bis 4 C-Atomen oder eine Alkoxygruppe von 1 bis 4 C-Atomen bedeutet, wobei

$R^1$, $R^2$, $R^3$ und $R^4$ zueinander gleiche oder voneinander verschiedene Bedeutungen besitzen können,

Y ein Fluoratom oder ein Bromatom oder bevorzugt ein Chloratom ist und

X jedes eine β-Sulfatoäthyl-Gruppe oder eine β-Thiosulfatoäthyl-Gruppe oder die β-Chloräthyl-Gruppe oder die Vinylgruppe bedeutet, wobei die beiden X gleiche oder voneinander verschiedene Bedeutungen besitzen können, und

die Gruppe(n) der Formel $-SO_2-X$ im Benzolkern in meta- oder para-Stellung zur Azogruppe bzw. zur acylierten Aminogruppe stehen und im Naphthalinkern in allen Stellungen gebunden sein können sowie

die zweite Gruppe der Formel $-SO_3M$ im Rest der Aminonaphthol-disulfonsäure in meta- oder para-Stellung zur acylierten Aminogruppe gebunden ist.

2. Verbindungen nach Anspruch 1 der allgemeinen Formel (1), dadurch gekennzeichnet, daß hier D den Benzolkern bedeutet und $R^1$, $R^2$, $R^3$ und $R^4$ jedes für ein Wasserstoffatom steht.

3. Verbindungen nach Anspruch 1 der allgemeinen Formel (1), dadurch gekennzeichnet, daß hier D einen Naphthalinkern bedeutet, $R^1$ ein Wasserstoffatom oder eine Sulfogruppe ist und $R^2$, $R^3$ und $R^4$ jedes für ein Wasserstoffatom steht.

4. Verbindungen nach Anspruch 1, 2 oder 3, dadurch gekennzeichnet, daß die X hier für die Vinyl- oder β-Sulfatoäthyl-Gruppen stehen.

5. Verbindungen nach Anspruch 1, 2 oder 3, dadurch gekennzeichnet, daß X hier jedes eine β-Sulfatoäthyl-Gruppe ist.

6. Verbindungen nach Anspruch 1, 2, 3, 4 oder 5, dadurch gekennzeichnet, daß die Formelreste $-SO_2-X$ im Benzolkern in para-Stellung zur Azogruppe bzw. zur acylierten Aminogruppe gebunden stehen.

7. Verbindungen nach einem der Ansprüche 1 bis 6, dadurch gekennzeichnet, daß M hier Wasserstoff, Natrium oder Kalium bedeutet.

8. Verfahren zur Herstellung der in Anspruch 1 genannten und definierten Azoverbindungen der allgemeinen Formel (1), dadurch gekennzeichnet, daß man eine Verbindung der allgemeinen Formel (2)

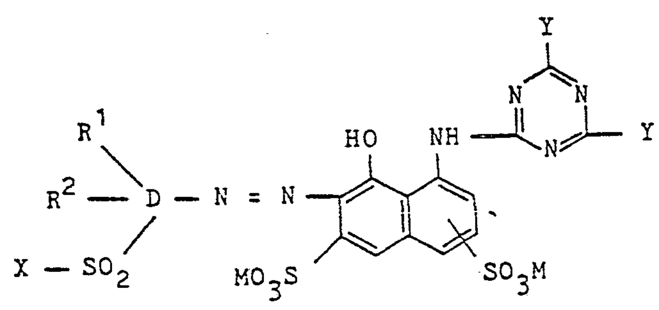

(2)

in welcher D, $R^1$, $R^2$, M, X und Y die in Anspruch 1 genannten Bedeutungen besitzen und die zweite Gruppe der Formel $-SO_3M$ im Rest der Aminonaphthol-disulfonsäure in meta- oder para-Stellung zur acylierten Aminogruppe steht, mit einem aromatischen Amin der allgemeinen Formel (3)

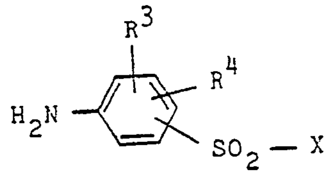

(3)

in welcher $R^3$, $R^4$ und X die in Anspruch 1 genannten Bedeutungen haben und die Gruppe der Formel $-SO_2-X$ im Benzolkern in meta- oder para-Stellung zur Aminogruppe gebunden ist, umsetzt oder daß man eine Azoverbindung der allgemeinen Formel (4)

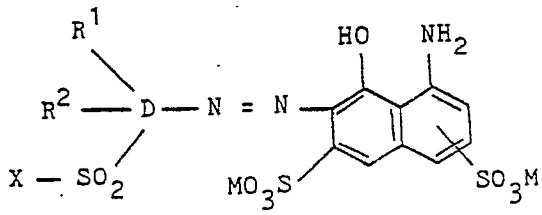

(4)

in welcher D, $R^1$, $R^2$, X und M die in Anspruch 1 genannten Bedeutungen besitzen und die zweite Gruppe der Formel $-SO_3M$ im Rest der Aminonaphthol-disulfonsäure in meta- oder para-Stellung zur Aminogruppe gebunden ist, mit einer Dihalogenotriazinylverbindung der allgemeinen Formel (5)

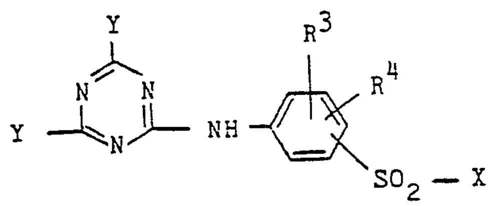

(5)

in welcher Y, $R^3$, $R^4$ und X die in Anspruch 1 genannten Bedeutungen besitzen und die Gruppe der Formel $-SO_2-X$ im Benzolkern in meta- oder para-Stellung zur acylierten Aminogruppe gebunden ist, umsetzt.

9. Verwendung einer Azoverbindung nach Anspruch 1 zum Färben von hydroxy- und/oder carbonamidgruppenhaltigem Material.

10. Verfahren zum Färben von hydroxy- und/oder carbonamidgruppenhaltigem Material, bei welchem man einen Farbstoff auf das Material aufbringt oder in das Material einbringt und ihn, gegebenenfalls in der Wärme und/oder in Gegenwart eines säurebindenden Mittels, fixiert, dadurch gekennzeichnet, daß man als Farbstoff eine Verbindung der in Anspruch 1 genannten und definierten allgemeinen Formel (1) einsetzt.

**Claims**

1. Water-soluble azo compounds of the general formula (1)

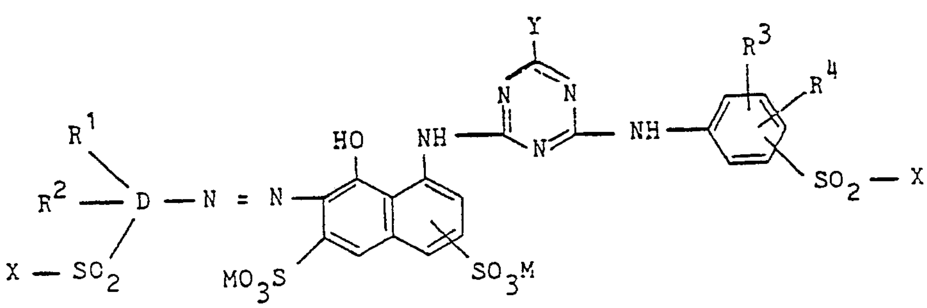

(1)

in which

M represents a hydrogen atom or the equivalent of a metal,

D is a benzene nucleus or a naphthalene nucleus,

$R^1$ denotes a hydrogen atom or an alkyl group of 1 to 4 C-atoms or a sulfo group,

$R^2$ is a hydrogen atom or an alkyl group of 1 to 4 C-atoms,

$R^3$ represents a hydrogen atom, an alkyl group of 1 to 4 C-atoms or an alkoxy group of 1 to 4 C-atoms and

$R^4$ denotes a hydrogen atom or an alkyl group of 1 to 4 C-atoms or an alkoxy group of 1 to 4 C-atoms, where $R^1$, $R^2$, $R^3$ and $R^4$ can be identical to or different from one another,

Y is a fluorine atom or a bromine atom or, preferably, a chlorine atom and

X in each case denotes a β-sulfatoethyl group or a β-thiosulfatoethyl group or a β-chloroethyl group or a vinyl group, where the two X can be identical to or different from one another, and

the group(s) of the formula $-SO_2-X$ are bonded in the benzene nucleus in meta- or para-position relative to the azo group, respectively to the acylated amino group, and can be bonded in the naphthalene nucleus in any position, and

the second group of the formula $-SO_3M$ in the radical of the aminonaphtholdisulfonic acid is bonded in meta- or para-position relative to the acylated amino group.

2. Compounds according to claim 1 of the general formula (1), characterized by that X denotes a benzene nucleus and $R^1$, $R^2$, $R^3$ and $R^4$ each represent a hydrogen atom.

3. Compounds according to claim 1 of the general formula (1), characterized by that D denotes a naphthalene nucleus, $R^1$ is a hydrogen atom or a sulfo group and $R^2$, $R^3$, and $R^4$ each represent a hydrogen atom.

4. Compounds according to claims 1, 2 or 3, characterized by that X represents a vinyl or β-sulfatoethyl group.

5. Compounds according to claims 1, 2 or 3, characterized by that X in each case is a β-sulfatoethyl group.

6. Compounds according to claims 1, 2, 3, 4 or 5, characterized by that the moieties $-SO_2-X$ are bonded in the benzene nucleus in para-position relative to the azo group, respectively to the acylated amino group.

7. Compounds according to any of claims 1 to 6, characterized by that M denotes hydrogen, sodium or potassium.

8. A process for the preparation of an azo compound of the general formula (1) mentioned and defined in claim 1, characterized by that a compound of the general formula (2)

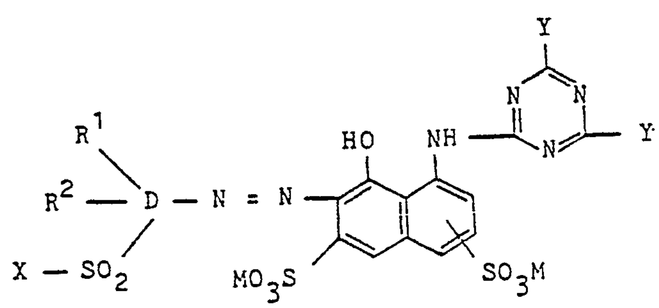

(2)

in which D, $R^1$, $R^2$, M, X and Y have the meanings mentioned in claim 1 and the second group of the formula $-SO_3M$ in the radical of the aminonaphthol-disulfonic acid is bonded in meta- or para-position relative to the acylated amino group, is reacted with an aromatic amine of the general formula (3)

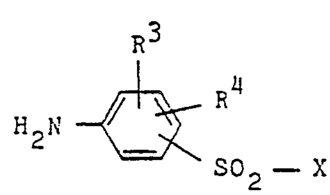

(3)

in which $R^3$, $R^4$ and X have the meanings mentioned in claim 1 and the group of the formula $-SO_2-X$ is bonded in the benzene nucleus in meta- or para-position relative to the amino group, or that an azo compound of the general formula (4)

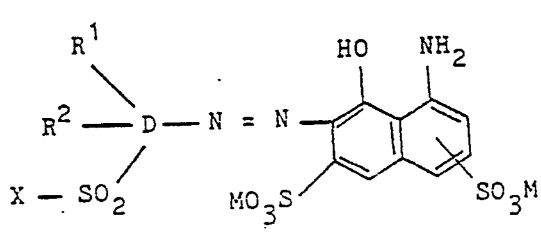

(4)

in which D, $R^1$, $R^2$, X and M have the meanings mentioned in claim 1 and the second group of the formula $-SO_3M$ in the radical of the aminonaphtholdisulfonic acid is bonded in meta- or para-position relative to the amino group, is reacted with a dihalogenotriazinyl compound of the general formula (5)

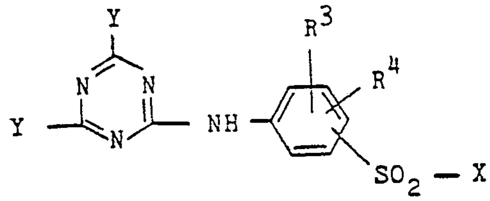

(5)

in which Y, $R^3$, $R^4$ and X have the meanings mentioned in claim 1 and the group of the formula $-SO_2-X$ is bonded in the benzene nucleus in meta- or para-position relative to the acylated amino group.

9. The use of an azo compound as claimed in claim 1, for dyeing a hydroxy- and/or carboxamide-containing material.

10. A process for dyeing a hydroxy- and/or carboxamide-containing material in which a dyestuff is applied onto or incorporated into the material and fixed, if appropriate under heat and/or in the presence of an acid-binding agent, characterized by that a compound of the general formula (1) mentioned and defined in claim 1, is used as dyestuff.

**Revendications**

1. Composés azoïques solubles dans l'eau qui répondent à la formule générale (1) :

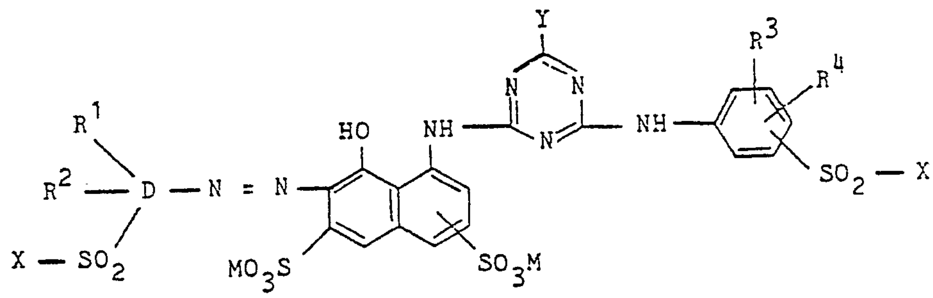

(1)

dans laquelle

M représente un atome d'hydrogène ou l'équivalent d'un métal,

D représente un noyau benzénique ou un noyau naphtalénique,

$R^1$ représente un atome d'hydrogène, un radical alkyle contenant de 1 à 4 atomes de carbone ou un radical sulfo,

$R^2$ représente un atome d'hydrogène ou un radical alkyle contenant de 1 à 4 atomes de carbone,

$R^3$ représente un atome d'hydrogène, un radical alkyle contenant de 1 à 4 atomes de carbone ou un radical alcoxy contenant de 1 à 4 atomes de carbone,

$R^4$ représente un atome d'hydrogène, un radical alkyle contenant de 1 à 4 atomes de carbone ou un radical alcoxy contenant de 1 à 4 atomes de carbone,

les symboles $R^1$, $R^2$, $R^3$ et $R^4$ pouvant avoir, les uns par rapport aux autres, des significations identiques ou différentes,

Y représente un atome de fluor ou un atome de brome mais de préférence un atome de chlore, et

les X représentent chacun un radical sulfato-2 éthyle, un radical thiosulfato-2 éthyle, un radical chloro-2 éthyle ou un radical vinyle, les deux X pouvant avoir la même signification ou des significations différentes, et dans laquelle :

le ou les radicaux $-SO_2-X$ sur le noyau benzénique peuvent se trouver en position méta ou para relativement au radical azo ou au radical amino acylé, ou le radical $-SO_2-X$ porté par un noyau naphtalénique pouvant occuper n'importe quelle position sur ce noyau, et

le second des radicaux $-SO_3M$ porté par le noyau naphtalénique de l'acide amino-naphtol-disulfonique étant, sur ce noyau, en position méta ou para relativement au radical amino acylé.

2. Composés de formule générale (1) selon la revendication 1, caractérisés en ce que D représente un noyau benzénique tandis que $R^1$, $R^2$, $R^3$ et $R^4$ représentent chacun un atome d'hydrogène.

3. Composés de formule générale (1) selon la revendication 1, caractérisés en ce que D représente un noyau naphtalénique, $R^1$ représente un atome d'hydrogène ou un radical sulfo, et $R^2$, $R^3$ et $R^4$ représente chacun un atome d'hydrogène.

4. Composés selon l'une quelconque des revendications 1, 2 et 3, caractérisés en ce que X représente un radical vinyle ou sulfato-2 éthyle.

5. Composés selon l'une quelconque des revendications 1, 2 et 3, caractérisés en ce que les X représentent chacun un radical sulfato-2 éthyle.

6. Composés selon l'une quelconque des revendications 1, 2, 3, 4 et 5, caractérisés en ce que les radicaux $—SO_2—X$ se trouvent chacun, sur le noyau benzénique correspondant, en position para relativement au radical azo ou relativement au radical amino acylé.

7. Composés selon l'une quelconque des revendications 1 à 6, caractérisés en ce que M représente l'hydrogène, le sodium ou le potassium.

8. Procédé de préparation des composés azoïques répondant à la formule générale (1) qui a été représentée et définie à la revendication 1, procédé caractérisé en ce qu'on fait réagir un composé répondant à la formule générale (2) :

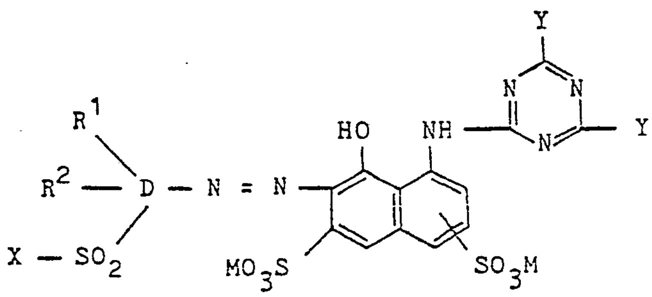

(2)

dans laquelle D, $R^1$, $R^2$, M, X et Y ont les significations données à la revendication 1 et le second des radicaux $—SO_3M$ se trouve, sur le radical de l'acide amino-naphtol-disulfonique, en position méta ou para relativement au radical amino acylé, avec une amine aromatique répondant à la formule générale (3) :

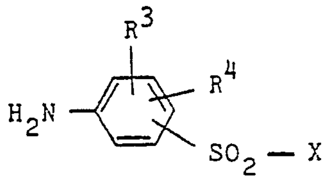

(3)

dans laquelle $R^3$, $R^4$ et X ont les significations données à la revendication 1 et le radical $—SO_2—X$ se trouve, sur le noyau benzénique, en position méta ou para relativement au radical amino, ou on fait réagir un composé azoïque répondant à la formule générale (4) :

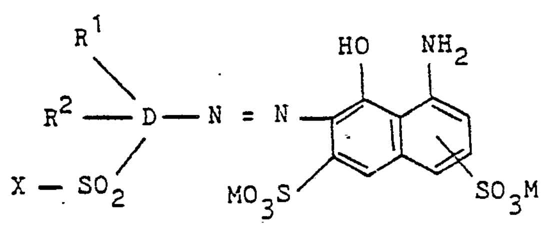

(4)

dans laquelle D, $R^1$, $R^2$, X et M ont les significations données à la revendication 1 et le second des radicaux $—SO_3M$ se trouve, sur le radical de l'acide amino-naphtol-disulfonique, en position méta ou para relativement au radical amino, avec un composé dihalogéno-triazinique répondant à la formule générale (5) :

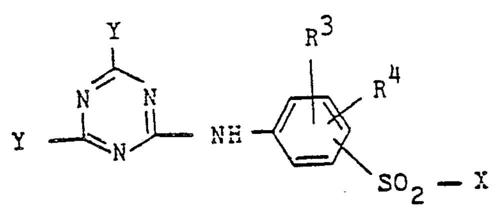

(5)

dans laquelle Y, $R^3$, $R^4$ et X ont les significations données à la revendication 1 et le radical $—SO_2—X$ se trouve, sur le noyau benzénique, en position méta ou para relativement au radical amino acylé.

9. Application d'un composé azoïque selon la revendication 1 à la teinture d'une matière contenant des radicaux hydroxy et/ou carbamoyles.

10. Procédé pour teindre une matière contenant des radicaux hydroxy et/ou carbamoyles, procédé selon lequel on applique sur la matière un colorant, ou on incorpore dans la matière un colorant, et on fixe celui-ci, éventuellement à chaud et/ou en présence d'un accepteur d'acide, ce procédé étant caractérisé en ce qu'on utilise comme colorant un composé répondant à la formule générale (1) qui a été représentée et définie à la revendication 1.